# EUROPEAN PATENT APPLICATION

(11) **EP 4 186 681 A1**
(43) Date of publication of application: **31.05.2023**
(21) Application number: 21211435.9
(22) Date of filing: 30.11.2021
(51) Int. Cl.: B29C 64/118, B29C 64/20, B33Y 10/00, B33Y 30/00, B33Y 80/00

(54) **A METHOD AND SYSTEM FOR MANUFACTURING A THREE-DIMENSIONAL POROUS STRUCTURE**

(71) Applicant: BASF SE, 67056 Ludwigshafen am Rhein (DE); VITO NV, 2400 Mol (BE)
(72) Inventor: LEFEVERE, Jasper, B-2400 Mol (BE); MICHIELSEN, Bart, B-2400 Mol (BE); KRAEMER, Michael, 67056 Ludwigshafen (DE); BORNINKHOF, Fred, 67056 Ludwigshafen (DE)
(74) Representative: V.O.

(57) **Abstract**

A method and system for manufacturing a three-dimensional porous structure, wherein interconnected filaments are deposited in a predetermined arrangement in a plurality of stacked layers, wherein the filaments of the consecutive layers are connected to one another to obtain the porous structure with interconnected pores, wherein filaments in the layers are deposited along waved paths such that narrowed regions and widened regions between at least one subset of adjacent filaments deposited along said waved paths are formed, wherein the plurality of stacked layers are positioned such that the widened regions formed in subsequent layers are at least partially overlapping so as to form intra-structure channels.

## Description

### FIELD OF THE INVENTION

The invention relates to a method and system for manufacturing a three-dimensional porous structure. The invention also relates to a three-dimensional porous structure, and a packed bed comprising a plurality of said porous structures. Additionally, the invention relates to a use of the three-dimensional porous structure(s) as a catalyst, catalyst carried and/or absorbent. Furthermore, the invention relates to a computer program product.

### BACKGROUND TO THE INVENTION

Additive manufacturing is currently widely used and various techniques exist. It can help building a structure layer-by-layer and the manufactured structure can be employed in various applications.

The lay-down pattern is determined by the print path and has major impact on the properties of the printed structure. Complex geometries and porous structures can be obtained with a fully interconnected network of pores which may be required for some applications. The geometries of the printed structure highly depend on the intended application or use of the porous structure. For example, porous structures may be needed in catalysis processes, absorption processes, heat transfer, etc., wherein the geometry and sizes of the pores are essential for the performance of the porous structure in said processes.

Additionally, it may be challenging using conventional additive manufacturing techniques to produce porous structures with great accuracy and reproducibility, especially the pores, in a fast way (e.g. continuous extrusion of a paste without start-stops). Often, the pores are deformed or blocked resulting in reduced performance in the processes.

Additionally, it is desired that the structure has adequate mechanical strength, in order to prevent damage (e.g. cracks, break off, etc.) due to handling. The mechanical and porous characteristics of porous structures obtained by means of additive manufacturing may be difficult to predict or guarantee. The porous structures may be very fragile (e.g. ceramic) and, therefore, the risk of failure may be relatively high if subjected to impacts. In some applications, for instance as use as a catalytic support, the structure may no longer be usable. Therefore, not only during the process (e.g. catalysis) in which the porous structure is used, but also during steps from the production of the porous structure to its transport and storage, a very high level of care and attention is necessary.

Furthermore, an extrusion process for manufacturing the porous structures may be characterized by major production limitations. The extrusion process may limit a geometrical freedom, making it difficult to build in pores having desired geometrical properties in the printed structure.

There is a need for improving the print pattern during the printing process to obtain porous structures with improved properties. In some cases, there is a strong desire to obtain porous structures with improved pores, for instance resulting in improved fluid dynamics properties during use. Furthermore, there is a desire to enhance the printing quality and suitability for printing porous structures for a wider range of applications. Examples of such applications are the use of porous structures as catalyst or catalytic supports, sorbents, heat exchangers and chromatographic materials.

For instance, in order to obtain high external surface areas for the catalysts, e.g. for diffusion limited reactions, or high packing fractions with low void volume, in fixed-bed catalyst reactors, the use of smaller catalyst extrudates may be used. In mass transfer limited reactions the performance of small catalyst extrudates may be better than that of larger extrudates, especially in mass-transfer limited reactions. A disadvantage, however, is that smaller extrudates show a higher pressure drop in the packed bed. Furthermore, the mechanical strength of these small extrudates is typically not sufficient to form a packed bed reactor.

### SUMMARY OF THE INVENTION

It is an object of the invention to provide for a method and a system that obviates at least one of the above mentioned drawbacks.

Additionally or alternatively, it is an object of the invention to provide for porous structures with an improved design.

Additionally or alternatively, it is an object of the invention to provide for porous structures with improved fluid dynamics properties when used in a fluid flow.

Additionally or alternatively, it is an object of the invention to provide for porous structures with improved structural integrity.

Additionally or alternatively, it is an object of the invention to provide for porous structures with improved pores and/or intra-structure channels whilst having a desired porosity

Thereto, the invention provides for a method of manufacturing a three-dimensional porous structure, the method including depositing interconnected filaments in a predetermined arrangement in a plurality of stacked layers, wherein the filaments of the consecutive layers are connected to one another to obtain the porous structure with interconnected pores, wherein filaments in the layers are deposited along waved paths such that narrowed regions and widened regions between at least one subset of adjacent filaments deposited along said waved paths are formed, wherein the plurality of stacked layers are positioned such that the widened regions formed in subsequent layers are at least partially overlapping so as to form intra-structure channels.

By employing the waved paths of filaments, the aerodynamic properties of the structure achieved by means of the pores can be improved. For example, the arrangement, configuration, sizes and the aerodynamic shapes of the intra-structure channels can be improved. The fluid flowing through the structure may encounter less resistance due to the geometry of the intra-structure channels, resulting in better aerodynamic performance and thus less pressure drop through the porous structure and/or a packed bed of porous structures, whilst maintaining or even improving contact between the fluid and the (inner portion) of the porous structure. Advantageously, since a lower pressure drop can be obtained, it becomes possible to work with smaller filament/fiber diameters compared to single extrudates.

Advantageously, the porous structure can have a non-square shape (e.g. rounded shape) whilst providing a desired porosity by means of the intra-structure channels. Using the filaments with waved paths, larger pores/openings can be obtained. Thus, the design of the intra-structure channels can be improved.

One or more filaments along waved paths (e.g. curved paths) can be used to obtain larger openings/pores in a layer of the porous structure. Such large openings cannot be achieved when using straight filaments with non-wavy print paths. As a result, employing straight filaments alone cannot provide for large openings with a same number of lines. For example, if only straight filaments are used, the filaments have to be placed relatively far from each other to get large pores/openings. Such gaps between the straight filaments may induce weaknesses in the structure that can cause the structure to become mechanically unstable and break down under influence of relatively small forces. The method according to the disclosure results in porous structures with improved structural integrity. Porous structures with relatively large pores/openings can be made whilst having an adequate mechanical strength.

Advantageously, it becomes easier to print a porous structure with increased surface area that is accessible to the gas flow due to a low pressure drop across each individual three dimensional porous structure.

A filament deposited along a wavy path, for example a curved path (e.g. following a sinusoidal path), may result in convex portions (peaks) and concave portions (troughs). Such geometrical variations with respect to another at least partially non-parallel filament can be used for creating openings or pores in an advantageous way. The openings/pores can be obtained between a wavy deposited filament and a straight filament. However, in some advantageous examples, the opening/pores are obtained between two opposing adjacently positioned wavy deposited filaments. The relative orientation and positioning of said two opposing wavy deposited filaments can be carefully chosen such as to form openings with a desired shape, size and configuration. For example, if the two opposing wavy deposited filaments are positioned in anti-phase with respect to each other, a convex portion of one of the filaments may be positioned opposite a concave portion of the other filament, such that a widened region or narrowed region can be formed. In this way, wide intra-structure channels may be obtained.

An intra-structure channel may have a relatively narrow portion between two wider openings may be described as "waisted". The opening obtained at the widened regions may be waisted, such that the opening at the widened region is followed by narrower regions towards the ends of the opening.

An intra-structure channel may form or join with a cavity and/or one or more other intra-structure channels within the porous structure. The intra-structure channels may join to form a cavity within the porous structure. Optionally, the intra-structure channels are substantially aligned with a principal axis of the porous structure.

The widened regions and/or narrowed regions may have the same configuration or different configuration (e.g. size) in one layer. Additionally or alternatively, the widened regions and/or narrowed regions may have the same configuration or different configuration (e.g. size) in for different layers of the porous structure.

The surface openings of an intra-structure channel may be offset from each other. The first and second openings of a single intra-structure channel may be different from each other. In some examples, a surface opening has a chamfered or rounded edge.

The obtained intra-structure channels running in a regular geometric pattern can create a significant pressure drop reduction.

The porous structure may have waved path filaments (e.g. curved), and wherein pores are made between adjacent non-parallel filaments, wherein at least one of the adjacent non-parallel filaments is a waved path filament. In some examples, the adjacent non-parallel filaments are both waved path filaments. The non-parallel filaments may be positioned opposite each other.

Optionally, each layer has multiple waved filaments deposited along waved lines, wherein a first subset of the waved lines are non-parallel with respect to each other.

The porous structure has a series of pores and/or intra-structure channels which are obtained by means of an arrangement of filaments along waved paths in the layers. For example, the filaments may be curved lines with a certain periodicity such that a succession of widened regions and narrowed regions are obtained, the widened regions defining the larger intra-structure channels. The filaments may be deposited in a predetermined pattern and arranged relative to each other in a predetermined manner, wherein opposing filaments follow a waved path for obtaining the succession of the widened regions with narrowed regions therebetween. Such positioning of the filaments in relation to each other provides for important advantages with regard to design, fluid dynamics properties (cf. pressure drop and fluid resistance through the structure), and structural integrity (cf. strength, stability, etc.).

In addition to enhancing the geometry of the intra-structure channels, the method according to the disclosure also enables for a highly efficient and effective manufacturing of porous structures. Advantageously, a porous structure can be obtained with a regular geometric pattern formed by filaments. The design freedom can also be significantly improved, allowing more complex designs tailored to the specific processes in which the porous structures are used. For example, in addition to a spherical or elliptical design, the porous structures may also have a non-spherical or non-elliptical design, e.g. a loped-design such as trefoil shape, quatrefoil shape, cinquefoil shape, etc. Outlines of combinations of shapes (e.g. different shapes) may also be employed, whilst allowing an easy way to include pores and intra-structure channels in the porous structure.

Optionally, the widened and narrowed regions are distributed on at least one surface of the porous structure in a regular manner. Optionally, the widened and narrowed regions are distributed around the surface of the porous structure in a regular manner. It is also envisaged that the widened and narrowed regions are distributed in an irregular manner. In some examples, the intra-structure channel openings are positioned at regular radial spacings on a surface and/or around a circumference of the porous structure.

The method according to the disclosure provides an efficient way of building porous structures with intra-structure channels with improved fluid dynamics properties (e.g. pressure drop, internal mixing of fluid for example for catalyst, absorption, heat exchange, etc.) whilst retain sufficient strength in the porous structure to enable it to be handled and used without significant risk of breakage. The waved paths enable to obtain stiff porous structures with limited pressure drop. Additionally, when the porous structures are used in a (packed) bed, channeling can be reduced or prevented.

Optionally, widened regions are formed between opposite non-parallel waved lines.

Optionally, the groups of non-equidistance non-parallel filaments are composed of two or more non-parallel opposing filaments.

Optionally, a second subset of the waved lines are parallel with respect to each other.

A pair of two or more adjacent parallel filaments can improve the structural strength of the porous structure. Such grouping of two or more consecutive parallel lines can significantly improve the strength, whilst requiring relatively small surface area. Larger pores/openings in the layer formed by using at least two opposing non-parallel filaments can be obtained without adverse effects on the structural integrity or strength of the porous structure. In some examples, the porous structure may not have any adjacent and/or opposing parallel filaments. Various printing patterns including adjacent parallel and adjacent non-parallel filaments are also possible.

Optionally, the second subset of filaments in each layer may be arranged in groups of two or more spaced-apart equidistant filaments, separated by a small distance or adjacent to each other.

Optionally, the second subset of waved lines with parallel lines may be configured such that printed/deposited filaments are adjacent to each other. In this way, the strength of the structure can be enhanced, not requiring for instance an adaptive nozzle opening area.

Optionally, a distance between opposing waved paths at the widened regions is at least 2 times larger than the distance between opposing waved paths at the narrowed regions, more preferably at least 5 times, even more preferably at least 10 times.

Optionally, the widened regions are obtained between two opposing and/or adjacent filaments along non-parallel waved paths. Optionally, more than two filaments along non-parallel waved paths are used for creating the pores/openings. A larger number of widened regions can be obtained in this way. Furthermore, in this way, different pore sizes and thus intra-structure channel sizes can be obtained in an easy and efficient way.

Optionally, the groups of equidistant parallel filaments are composed of 2, 3 or 4 to 6 parallel filaments.

Optionally, the narrowed regions are such that deposited filaments are adjacent each other in those regions.

Optionally, the waved paths are sinusoidal paths.

Optionally, the waved paths are non-sinusoidal periodic paths.

Optionally, the waved paths are periodic paths with straight line portions.

Optionally, the waved paths are at least one of: a sawtooth wave path, a triangle wave path, a square wave path, a zigzag wave path or a pulse wave path.

Optionally, the first and second opening of the intra-structure channels are distributed around the external surface of the porous structure in a regular pattern.

Optionally, the intra-structure channels have a substantially constant cross-section along the length of the intra-particle channels.

Optionally, the filaments have a thickness between 10 micrometer and 3 centimeter, more preferably between 50 micrometer and 1 centimeter.

Optionally, the porous structure has a size in a range between 3 mm and 250 mm along a principal axis, more preferably between 5 mm and 70 mm.

The periodicity parameters of the wave along which filaments are deposited can be tuned depending on the desired pattern design. This can be done by changing e.g. the relative positioning, amplitude, frequency, phase, path direction, in the layers. It will be appreciated that various pattern designs are possible.

Optionally, at least a subset of the layers of filaments which are stacked on top of each other have the same pattern of filaments and are oriented at an angle to one another.

Optionally, every (n+1)-th layer has a same orientation, wherein n is a natural number equal to or larger than 1. For example, every second layer (n=1), third layer (n=2) may have a same orientation. Other printing arrangements for instance with a varying n can also be employed.

Optionally, the waved paths are periodic paths, wherein the periodic paths have a ratio of an amplitude of the wave to a width of the wave which is in a range between 0.1 to 100, more preferably 1 to 50, even more preferably 2 to 20.

Advantageously, the method allows to obtain larger intra-structure channels whilst maintaining or even enhancing the structural strength of the porous structure compared to the case in which only straight filaments are used. The larger intra-structure channels may lead to lower pressure drops across a packed bed with such porous structures. Such a lower pressure drop may be of great importance for catalysis because less energy is required to direct flow through packed bed. Moreover, a lower pressure drop through packed bed can result in more flow of fluid through the structure, which can in turn result in enhanced conversion for example in a catalysis or absorption process.

Optionally, at least one periodic path has varying wave characteristics such that its ratio varies along its length.

The wave characteristics along the waved paths are not necessarily the same for the waved filaments in each layer. Furthermore, the wave characteristics are not necessarily constant. In some cases, more complex geometries can be obtained by employing a non-constant wave characteristics along the waved paths. For instance, one waved path may have a changing wave characteristics over its length (e.g. changing frequency and/or amplitude). It is also possible that the filaments have connecting portions, for instance a straight portion connecting two waved portions.

Optionally, the three-dimensional porous structure has waved outer side portions formed by portions of outer deposited waved filaments in the plurality of stacked layers.

Optionally, the peripheral surface of the structure is curved (e.g. lobed) achieved by the filaments which are printed along the waved paths. A large number of pattern variations are envisaged, which can be achieved by the relative positioning of filaments and amplitude, frequency and phase parameters of the wave functions along which the waved filaments are printed/deposited.

Optionally, the porous structure has a lobed cross-section. For example, the porous structure may have a quadri-lobe cross-section. Such geometrical shape provides improved structural strength, whilst also providing limited pressure drop over the structure (e.g. monolith structure). Additionally or alternatively, the pressure drop over a packed bed with (randomly) the porous structures can be limited. Additionally or alternatively, the tendency to channelling can be reduced or prevented when the porous structures are employed in the packed bed.

Optionally, the porous structure has a three-dimensional ellipsoidal shape.

Advantageously, an ellipsoidal porous structure may achieve a higher packing density than conventionally shaped spherical or cylindrical porous structures. The available surface for contact with a fluid stream is larger when the packing density is higher. However, this can result in increased resistance to flow which commonly manifests as increased pressure drop through a (packed) bed. A larger available surface affects key properties of a chemical reaction taking place within a (packed) bed of such porous structures, which enable the reaction to be better controlled. The available surface of the catalyst porous structures may be selected to control reaction rates, contact times and heat transfer in the catalyst bed. The shape of the ellipsoidal porous structure is controlled by the relative lengths of its three principal axes. The relative lengths of the principal axes determine the packing density. The ratio of axes of a spheroid may be referred to as the aspect ratio. These parameters may be selected based on the application in which the porous structures are used. In some examples, a quadri-lope shape can provide similar or even better results, while resulting in lower pressure drops.

Optionally, the porous structure has at least three major axes. The three major axes may be of the same length. Alternatively, it is also possible that at least two of the three major axes are of different length. Optionally, all three of the major axes are of different lengths.

Optionally, the surface of the porous structure includes one or more grooves, blind channels and/or indentations. Additionally or alternatively, the surface of the porous structure may include protrusions such as bosses, ridges and lobes, for example. Such surface topography may be used to control the packing density and the average cross-sectional area of the inter-structure channels. For example, a quadri-lope design may provide for improved packing density whilst also providing for enhanced structural strength.

Optionally, the porous structure has an external surface and comprises at least two intra-structure channels. Optionally, the intra-structure channels extend from a first opening at a first location on the external surface of the porous structure through the interior of the porous structure to a second opening at a second location on the external surface of the porous structure.

Optionally, the porous structure has openings/pores along the side, i.e. the side surface which is perpendicular to the surface of the layers.

Optionally, the porous structure has axial and radial intra-structure channels. Optionally the radial intra-structure channels are transverse to the axial intra-structure channels. The radial channels may be formed by the stacking configuration of the layers on top of each other.

Optionally, the porous structure has a three dimensional geometry such that zig-zag flow patterns are formed through the intra-structure channels. Such zig-zag flow pattern may increase the mixing (and thus catalytic activity for example) by providing a higher degree of turbulence in the three dimensional structure whilst providing a decrease in the pressure drop across the structure when compared to the state of the art manufactured porous structures, for example state of the art catalyst prepared by layer fiber addition.

Optionally, layers are symmetrical with respect to at least one symmetry axis.

Optionally, the filaments are deposited continuously as partial filaments of one single continuous filament in each layer.

Optionally, the three-dimensional structure has a first set of pores and a second set of pores, wherein pores of the first set of pores are larger than pores of the second set of pores, and wherein the first set of pores are formed at the widened regions, and wherein the second set of pores are formed at the narrowed regions.

The filaments printed/deposited along the waved paths can be positioned such that regions that are more open and regions that are more dense can be created in the layers of the porous structure. In this way, a cellular structure can be obtained with excellent mechanical properties, such as to prevent damage during use when the porous structures are under mechanical stress.

Optionally, at least a subset of pores of the first set of pores has an opening surface area which is at least two times larger than an opening surface area of at least a subset of pores of the second set of pores, more preferably at least three times larger, even more preferably at least five time larger.

Optionally, the filaments are deposited in the predetermined arrangement with a reduced density of the porous structure at the one or more widened regions, and wherein the filaments are deposited in the predetermined arrangement with an increased porosity of the porous structure at the one or more narrowed regions. Advantageously, a better control over the desired porosity of the printed porous structure can be obtained by performing the method according to the disclosure.

Advantageously, by employing filaments with waved paths (e.g. curved), more material can be deposited compared with the same number of straight filaments in the same structure, leading to an increased density and geometric surface area.

Optionally, the filaments are deposited in the predetermined arrangement with an increased filament-to-filament distance at the one or more widened regions, and wherein the filaments are deposited in the predetermined arrangement with an reduced filament-to-filament distance at the one or more narrowed regions.

Optionally, the filament-to-filament distance of a same layer at the one or more widened regions is larger than two times a filament diameter, more preferably larger than five times a filament diameter, even more preferably larger than eight times a filament diameter.

Optionally, the porous structure is composed of alternating layers of non-linear spaced-apart filaments or strands that are placed adjacent to each other. Optionally, the non-linear spaced-apart filaments are non-parallel with respect to each other.

Optionally, the filaments in alternating layers are oriented at an angle to one another.

Optionally, each layer has at least one pair of opposing waved paths, wherein a relative phase difference between the opposing waved paths results in the widened regions and the narrowed regions. In this way, periodically occurring widened and narrowed regions may be obtained. The distance between the opposing waved paths can be smaller at the narrowed regions and larger at the widened regions. The distance may vary periodically depending on the wave characteristics of the opposing waved paths, which can be tuned for obtaining a certain porosity properties of the three-dimensional structure. The spaced-apart non-parallel opposing waved paths may provide for larger pores going through the porous three-dimensional structure. This not only makes producing of porous three-dimensional structures more easy, but also provides more design freedom. Additionally or alternatively, the structural stability or strength of the three-dimensional porous structures can be improved.

Optionally, the waved paths are orthogonal or oblique to each other in consecutive layers.

Optionally, the 3D porous structure is used in oxidation, hydrogenation, reforming and/or dehydration reaction processes.

Optionally, the three-dimensional porous structures are manufactured for use as a porous catalyst, a catalyst carrier or absorbent material.

Advantageously, the porous structure may be sufficiently mechanically stable so that packed beds can be formed, e.g. in a reactor. The porous structure can give a low pressure drop in a structured or in a randomly packed bed of monolith bodies without the tendency to channeling. For example, a porous catalyst structure with a catalytically active metal which has a high external surface area or high packing fraction can be obtained by performing the additive manufacturing method according to the invention.

For example, inorganic catalysts, catalyst supports or absorbents may be produced as extruded strands or extruded monolith.

The intra-structure channels may form conduits extending through the porous structure. The geometry of the intra-structure channels obtained by means of filaments following a waved path, enables an enhanced contact between the structure and the fluid flowing through the structure. This can be of great importance for instance of catalysis or absorption.

Advantageously, a higher packing density can be obtained, and the pressure drop across a packed bed of porous structures can be reduced.

Optionally, the porous structure is made of a material having a catalytically active composition.

Optionally, the porous structure is coated with at least one catalytically active composition.

Optionally, the catalytically active composition is distributed on the external surface of the porous structure, and on the internal surface of the intra-structure channels of the porous structure.

Optionally, the three dimensional porous structure is made of silicon dioxide, aluminum oxide, titanium dioxide, zirconium dioxide, magnesium oxide, calcium oxide, mixed metal oxides, hydrotalcites, spinels, perovskites, metal phosphates, silicates, zeolites, steatite, cordierite, carbides, nitrides or mixtures or blends thereof.

Optionally, a catalytically active metal is selected from a group consisting of Na, K, Mg, Ca, Ba, Al, Si, Ti, V, Cr, Mn, Fe, Co, Ni, Cu, Zn, Y, Zr, Nb, Mo, Ru, Rh, Pd, Ag, Sn, Sb, La, Hf, W, Re, Ir, Pt, Au, Pb, and Ce and mixtures or alloys thereof. In some examples, a metal of a metal compound may include a precious metal, e.g. comprising one or more of Pt, Pd, Ir, Ru, Re, optionally mixed with one or more transition metals. A transition metal compound may include lanthanide metal compounds and actinide metal compounds. The transition metal compounds may be a metal oxide, metal hydroxide, metal carbonate, metal hydroxycarbonate or mixture thereof. Transition metal oxides may comprise a single or mixed metal oxide such as a spinel or perovskite, or a composition comprising two or more transition metal oxides. It is also envisaged that the catalytically active composition may further comprise one or more powdered inert materials such as alumina, silica, silicon nitride, silicon carbide, carbon and mixtures thereof. Other materials such as ceramics (e.g. cordierite) or zeolite may also be used.

Optionally, a binder material is employed, the binder material being an organic binder such as methyl cellulose.

Optionally, a binder material is employed, selected from the group consisting of inorganic binders, such as clays, alumina, silica or mixtures thereof.

Optionally, the three-dimensional porous structure is a made of a polymer material or plastic material. Such materials may for example be used in gas sorption processes.

Optionally, the three-dimensional porous structure is made of ABS (Acrylonitrile Butadiene Styrene) and its derivatives, ASA (Acrylonitrile Styrene Acrylate) and its derivatives, PETG (Polyethylene Terephthalate) and its derivatives, Nylon and its derivatives, PLA (Polylactic Acid) and its derivatives.

Optionally, the additive manufacturing process is a fused deposition modelling (FDM) process, a fused filament manufacturing (FFM) process, a paste extrusion process, or a robocasting process. Various other additive manufacturing processes may be employed. Although the method according to the disclosure provides significant advantages for extrusion based additive manufacturing, in some examples, printing of filaments may be performed instead of depositing of filaments.

In a robocasting manufacturing process, a paste of the catalyst material particles is extruded into strands which are deposited in stacked layers to form the desired three-dimensional structure. Subsequently, the structure can be dried and sintered.

Other additive manufacturing processes may also be employed, such as a rapid prototyping process. For example, in a powder-based or lithography based rapid prototyping process, a binder material is selectively introduced in an inorganic catalyst powder to form the three-dimensional structure. This can also result in a filament like structure.

According to an aspect, the invention provides for a three-dimensional porous structure obtained by material extrusion, the porous structure having interconnected filaments in a predetermined arrangement in a plurality of stacked layers, wherein the filaments of the consecutive layers are connected to one another to obtain the porous structure with interconnected pores, wherein filaments in the layers are deposited along waved paths such that narrowed regions and widened regions between at least one subset of adjacent filaments deposited along said waved paths are formed, wherein the plurality of stacked layers are positioned such that the widened regions formed in subsequent layers are at least partially overlapping so as to form intra-structure channels.

The printing/deposition method according to the invention allows for designing and producing porous structures, in which the pressure drop over said porous structure (for example used in a packed bed) can be better tuned for the process in which the porous structures are used. In this way, the design of the porous structure can be used in order to improve the fluid flow within a packed bed so that the reaction rate may be better controlled.

Advantageously, the porous structures used in a packed bed may be capable to withstand higher forces, for example under the conditions of temperature and pressure used in a catalysis reactor.

It is usually beneficial for a catalyst or sorbent bed to provide a minimal pressure drop, or resistance, when fluid is passed through the bed. A high pressure drop through a porous structure bed requires that high fluid pressure is used in order to achieve a desired flow rate. Employing such high pressures may entail compression and pumping costs and increases the wear on process equipment compared with a similar process step involving a lower pressure drop. Furthermore, forcing a fluid through a porous structure bed at high pressure may also damage the porous structures. If porous structures fracture into smaller porous structures under such pressure then the compaction of the bed increases, thereby further increasing the pressure drop through the bed.

However, in some processes it is desirable to increase the pressure drop through a catalyst bed. For example, when a porous structure bed is relatively thin in to the direction of fluid flow, a high pressure drop may be used to increase the contact time between the fluid and the catalyst or otherwise to control the fluid flow rate.

The intra-structure channels may be straight, angled or curved. The intra-structure channels may provide a tortuous path through the structure. For example, the intra-structure channels may at least follow a zig-zag path. Each intra-channel may have a cross-section which is of any shape. The cross-section shape may depend on the waved paths forming the widened regions. For example, the cross-section shape may be generally rounded, e.g. elliptical or polygonal shape with e.g. rounded edges. For example, square/rectangular channels or triangular channels are also possible, for example obtained by sawtooth waved paths.

According to an aspect, the invention provides for a packed bed comprising three-dimensional porous structures according to the disclosure.

A packed bed of porous structures may comprise a container such as a tube which is filled with the porous structures in a structured way or in a random way. In this way, a column with porous structures can be obtained, which can for instance be used in a catalysis or absorption process. However, the porous structures can also be used as individual monoliths, for example in catalysis or absorption processes. It will be appreciated that the advantageous porous structures may also be used in other processes or applications.

The pressure drop through a packed bed of structures increases if the density of the structures is higher (e.g. more filaments in the porous structure). Advantageously, the porous structures printed according to the disclosure which have the same density as the structures with straight lines can still provide a lower pressure drop in packed bed.

Optionally, all of the porous structures forming a packed bed may be essentially identical, for example differing only within manufacturing tolerances.

Optionally, a packed bed may be formed from different porous structures, at least one of the porous structures being according to the disclosure. The size, shape and internal void space may vary between porous structures in the same packed bed. The nature or concentration of a catalytically active material may vary between porous structures in the same catalyst bed. In some examples, different catalyst porous structures may be mixed together to form an essentially homogeneous mixture of porous structures forming the bed.

Optionally, the void space within the porous structures may be selected to be in proportion to the void space between porous structures when they are packed in a packed bed (e.g. catalysis bed, absorption bed, head exchange bed, etc.). In some examples, the volume of the void space within the porous structures may be selected to be approximately the same as the volume of void space between porous structures when they are packed in the packed bed. In some examples, an average width, characteristic length or diameter of intra-structure channels within the porous structures may be selected to be approximately the same as the average width, characteristic length or diameter of void space in the form of intra-structure channels between the porous structures when they are packed in the packed bed. In some examples, the average cross-sectional area of intra-structure channels passing through the porous structures is selected to be approximately the same as the average inter-structure void area in the form of channels between the porous structures when they are packed in the packed bed. In such examples, "approximately the same means" may be understood as equal to or within ±50%, or ±40%, or within ±20% of the void space between the porous structures. The inter-structure channel properties in the packed bed, such as for instance the average inter-structure channel cross-sectional area, or total void volume, may be estimated or calculated using physical, mathematical, numerical, computational or empirical modelling methods or combinations of such methods (cf. hybrid method).

According to an aspect, the invention provides for an additive manufacturing system adapted to perform the method according to the disclosure.

Advantageously, more complex shapes of pores in the layers, and thus more complex shapes of intra-structure channels can be obtained. The pores/openings between the filaments in the layers can be obtained by means of at least two non-parallel lines, wherein at least one of the at least two non-parallel lines is deposited/printed along a waved path.

According to an aspect, the invention provides for a use of the three-dimensional porous structures as a porous catalyst, a catalyst carrier and/or absorbent material. For example, the porous structure may be a catalytic support for catalysis processes. In some examples, porous structures are employed in a packed bed, wherein the packed bed is usable in catalysis processes or absorbent processes. Advantageously, the porous structures according to the disclosure result in a limited pressure drop over the packed bed, which can be beneficial for the catalysis and absorbent processes.

According to an aspect, the invention provides for a computer program product containing a set of instructions stored thereon that, when executed by a control system of an additive manufacturing system, results in the system to performing a method according to the disclosure.

According to an aspect, the invention provides for a catalyst bed comprising a plurality of catalyst and/or absorbent porous structures contained within a vessel manufactured by performing the method according to the disclosure.

According to an aspect, the invention provides for a method of carrying out a chemical reaction comprising the step of contacting at least one fluid containing at least one starting chemical compound with a catalyst bed according to the disclosure.

According to an aspect, the invention provides for a method of treating a fluid mixture to selectively remove one or more target components of the mixture by contacting the fluid mixture with a catalyst bed according to the disclosure.

The porous structures may include void spaces therein which are in fluid communication with a surrounding space through pores at the external surface. The pores may be advantageously obtained by means of the intra-structure channels formed at the widened regions between one or more filaments printed along waved paths, in each layer.

It will be appreciated that the term void space, pores, etc., is not intended to include microscopic spaces such as micro-pores or micro-spaces/voids between porous structures of material from which the porous structure is formed (e.g. paste material from which a catalyst structure is formed). It will be appreciated that a void space or pore as used herein refers to a macroscopic space or pore within the structure. A void space may comprise an internal cavity, a surface groove or indentation, or an intra-structure channel, or a combination of more than one type of void space, extending from a first location on the surface of the porous structure through the interior of the porous structure to a second location on the surface of the porous structure. An intra-structure channel always includes an opening at the surface of the porous structure such that fluid may enter and leave the porous structure. Such intra-structure channels may be of critical importance for various applications (e.g. involving catalysis, absorption, heat transfer, etc.). The porous structures may comprise more than one intra-structure channel. The porous structure may comprise, for example, more than 3 intra-structure channels, such as for instance 4 intra-structure channels (e.g. in a quadri-lope shape design of the structure). A larger number of intra-structure channels is also envisaged, e.g. larger than 12 intra-structure channels, larger than 24 intra-structure channels, etc. The number of intra-structure channels may depend on the geometrical shape of the porous structure. In some examples, the porous structure comprises 1 to 100 intra-structure channels per cm² of the porous structure's cross-section.

Optionally, the intra-structure channels include ribs, flutes or vanes on its internal surface. Each channel may have a cross-section which varies along the length of the channel. The internal surface of the intra-structure channel may be shaped to promote mixing of a fluid as it passes through the channel, for example by providing a threaded, helical, zig-zag channel or the like. The intra-structure channels may or may not have parallel walls. An intra-structure channel may be wider at an end and/or towards the centre of the channel. Additionally or alternatively, an intra-structure channel may include a narrow portion, for example adjacent either of the surface openings or between the surface openings. The diameter of any one intra-structure channel may be the same as or different from the diameter of any other intra-structure channel within the same porous structure.

It will be appreciated that a waved path may also include straight line portions. Various wavy patterns may be employed, for example with curved lines, straight lines, or combination of curved and straight lines.

It will be appreciated that any of the aspects, features and options described in view of the method apply equally to the additive manufacturing system and the described porous structure, use of the porous structures and the computer program product. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1a, 1b, 1c, 1d show a schematic diagram of waved paths;
Fig. 2 shows a schematic diagram of deposition paths in two subsequent layers;
Fig. 3 shows a schematic diagram of deposition paths in two subsequent layers;
Fig. 4 shows a schematic diagram of deposition paths in a layer;
Fig. 5 shows a schematic diagram of deposition paths in two subsequent layers;
Fig. 6 shows a schematic diagram of deposition paths in a layer;
Fig. 7 shows a schematic diagram of deposition paths in a layer;
Fig. 8 shows a schematic diagram of deposition paths in two subsequent layers;
Fig. 9a, 9b show graphs relating to a performance of porous structures;
Fig. 10 shows a schematic diagram of deposition paths in two subsequent layers; and
Fig. 11a, 11b, 11c show different views of a schematic diagram of an embodiment of a porous structure.

### DETAILED DESCRIPTION

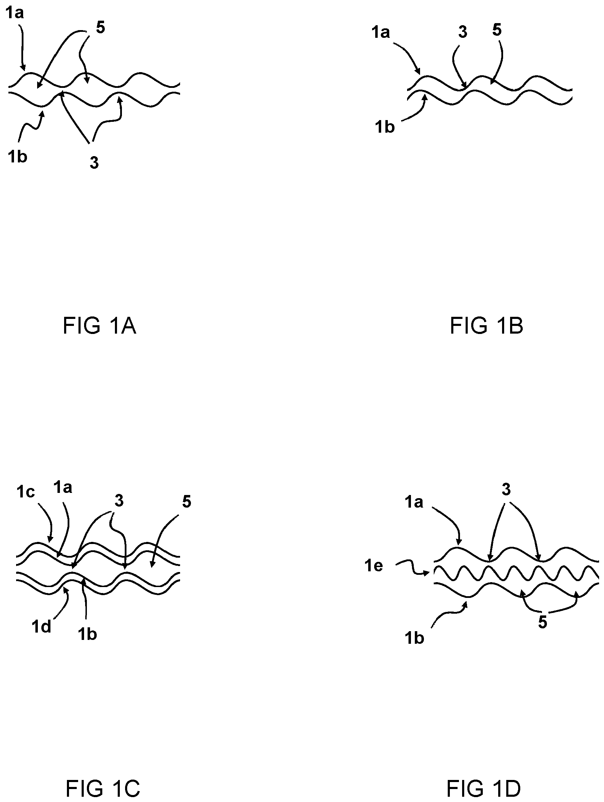

Fig. 1a, 1b, 1c, 1d show a schematic diagram of a top view of exemplary waved paths for manufacturing a three-dimensional porous structure. Different exemplary configurations are provided. For the sake of simplicity, only opposing adjacent filament deposition paths are shown. The filaments in the layers are deposited along waved paths 1a, 1b, 1c, 1d, 1e such that narrowed regions 3 and widened regions 5 between at least one subset of adjacent filaments deposited along said waved paths 1a, 1b, 1c, 1d, 1e are formed. The stacked layers are positioned such that the widened regions 5 formed in subsequent layers are at least partially overlapping so as to form intra-structure channels in the porous structure.

In fig. 1a, a first waved path 1a and a second waved path 1b opposite each other are configured such that narrowed regions 3 and widened regions 5 are formed. Each layer of the structure may have more than one opposing filaments along waved paths for forming openings at the widened regions 5.

In fig. 1b, the first and second wave paths 1a, 1b are shifted with respect to each other (cf. phase shift), resulting in a different shape and dimensions of the widened regions 5. The narrowed regions 3 are also different compared to the configuration shown in fig. 1a.

In fig. 1c, the first and second wave paths 1a, 1b are non-parallel opposing and adjacent printing paths, between which the narrowed regions 3 and widened regions 5 are formed. This is achieved by the changing distance between the two opposing wave paths 1a, 1b as a result of their wave functions and positioning. Furthermore, each of the first and second wave paths 1a, 1b are accompanied by one parallel wave path 1c, 1d, respectively. This can be done for achieving greater local strength in the structure, which can provide significant advantageous in the structural integrity of the porous structure.

In fig. 1d, the narrowed regions 3 and widened regions 5 are formed between three waved paths 1a, 1b, 1e. Between the waved paths 1a, 1b, an additional waved path 1e is provided. This additional intermediate waved path may have a wave function with a different frequency compared to the frequency in the wave function of the first waved path 1a and/or the second waved path 1b.

In the successive layers in the porous structure, the widened regions 5 may be superimposed such as to form intra-structure channels going through the structure. The pores can be obtained efficiently in this way. Additionally, the porous structure can have larger pores whilst having a suitable mechanical strength. The obtained pores can ensure, depending on the application, that a good flow of fluid through the structure is possible (cf. reduced pressure drop and enhanced fluid-structure contact or interaction), both for a monolith and in a packed bed.

The waved paths are periodic paths, wherein the periodic paths have a ratio of an amplitude of the wave to a width of the wave. For example, the ratio is in a range between 0.5 and 3. Such configurations may provide for a structure with relatively wide pores and an adequate structural strength.

Optionally, one or more void spaces within the porous structure may comprise one or more intra-structure channels extending from a first opening at a first location on the surface of the structure to a second opening at a second location on the surface of the structure. Fluid may enter or leave the interior of the structure through the openings.

The adjacent opposite non-parallel filaments which create the widened 5 and narrowed regions 3 therebetween may be distanced from each other at the narrowed regions 3. However, it is also possible that the filaments meet each other at the narrowed regions 3 (e.g. touch or closely adjacent to each other). For example, a widened region 5 between two narrowed region 3 may define one pore opening. Alternatively, it is also possible that the filaments at the narrowed regions 3 are distanced from each other. In this way, a variation of smaller and larger intra-structure channels through the porous structure can be obtained. The filaments may each have a same or different periodic function along the waved path.

The method according to the disclosure provides and easy and efficient way of providing the intra-structure channels in porous structures. Moreover, the fluid flow through a bed of such porous structures can be improved. The obtained intra-structure channels affect the back-pressure or resistance to flow within a bed of porous structures. The waved paths of opposing filaments can be tuned such that desired intra-structure channels are obtained, with desired geometrical properties. This allows for advanced geometrical design of the porous structures, whilst allowing for a fast and easy manufacturing process.

The waved paths may define a widened region which may be described as 'waisted', wherein the widened region is provided between the two narrowed regions.

In some examples, adjacent layers may have a same pattern of non-parallel filaments and may be oriented at an angel to one another. It will be appreciated that the layers may have, in addition to the non-parallel filaments printed along waved paths, also parallel filaments. Such parallel filaments may also follow waved paths and thereby locally increase the stiffness of the porous structure (e.g. similar to a thicker filament). In some examples, the parallel filaments are printed adjacent to each other to form a rib in the porous structure.

It will be appreciated that various 3D printing technologies can be used, such as robocasting with paste extrusion, laser sintering techniques, direct light processing, fused filament technique, stereolithography, fusion fabrication technique.

It will be appreciated that the layers may have one or more straight filaments and one or more non-straight filaments which follow a waved path. The pores (and thus intra-structure channels) are obtained by the non-parallel configuration of the filaments in the layers of the porous structure.

In some examples, the three dimensional porous structures of the disclosure are used as a catalyst, a catalyst carrier or absorbent monoliths or smaller catalyst, catalyst carrier or absorbent shaped bodies. The former may for example be used in structured packings of a reactor. The latter are typically used in randomly packed catalyst beds. In both cases, the inventive geometry of the three-dimensional porous structures provides important advantages relating to both structural properties (structural integrity) and fluid dynamics properties (pressure drop and mixing of fluid inside the structure during use).

The porous structures may have various shapes, such as for instance ellipsoid, quadri-lope shaped, cylindrical, spherical, etc. In some examples, the principal axes have an equal length. In some examples, no more than two of its principal axes of equal length. Various geometries, dimensions and forms are possible.

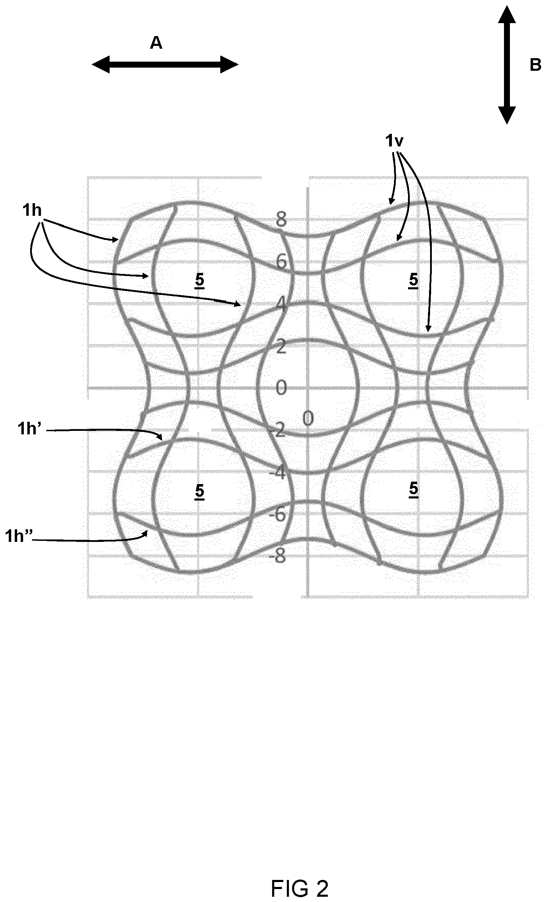

Fig. 2 shows a schematic diagram of a top view of deposition paths in two subsequent layers. In a first layer, the waved print paths 1h are waved in a first direction A, and in the second layer, the waved print paths 1v are waved in a second direction B transverse to the first direction A. In this example, the first direction A is horizontal, and the second direction B is vertical. However, a different angle between direction A and direction B may be provided.

In this example, the porous structure has a quadri-lope design. Such design may provide enhanced structural strength and aerodynamic properties (cf. pressure drop and contact between fluid and structure). The stacked layers are positioned such that the widened regions formed in subsequent layers are at least partially overlapping so as to form intra-structure channels.

As can be seen, in a layer of the porous structure, a first filament 1h' is mirrored with respect to a second filament 1h". As a result, these opposing first and second filaments 1h', 1h" are non-parallel with respect to each other. In this way, larger pores/openings can be obtained at the widened regions 5. The print/deposition pattern of filaments may be at least partially symmetrical (e.g. one or more mirror planes). The layers may have a combination of parallel and non-parallel lines.

Not all adjacent (opposing) filaments need to be anti-parallel. Certain adjacent (opposing) filaments may be parallel to give extra strength to the porous structure. The adjacent non-parallel filaments may be mirror symmetrical. However, it is also possible that the adjacent non-parallel filaments are shifted with respect to each other along their longitudinal direction, cf. phase difference between the waved paths. The phase difference may for instance be in a range between 150 to 200 degrees.

In each layer, the larger pores may be formed at the widened regions 5, wherein non-parallel filaments within each layer are arranged in groups of two or more spaced-apart filaments, wherein said non-parallel filaments are printed along wave paths. For example, the group of two spaced-apart filaments may be shifted relative to each other (cf. phase difference in periodic wave function) such as to form periodic widened regions with larger distance between the two spaced-apart filaments and periodic narrowed regions with smaller distance between said two spaced-apart filaments. Various configurations and printing paths may be employed. In some examples, the waves may have a sinusoidal path. However, other shapes such as sawtooth path may also be employed. A combination of different types of wave paths may also be used. It is also envisaged that wave characteristics change along the longitudinal length of the filaments.

Various materials can be used for producing the porous structure. In some examples, the three-dimensional porous structure is made of an alumina, silica, a metal-aluminate, an alumino-silicate, zirconia, titania, magnesia, silicon nitride, silicon carbide, zinc oxide, carbon or a mixtures or blends thereof. The porous structure may for example be a three-dimensional porous catalyst, catalyst carrier or absorbent monolith of stacked strands of catalyst, catalyst carrier or absorbent material.

The waved paths 1h', 1h" of opposing filaments are such that a widened region is formed between two narrowed regions. As a result waisted opening can be obtained, which may result in enhanced fluid dynamics properties of the porous structure, such as for instance limited pressure drop, and additionally also in a higher crush strength. Moreover, this way of producing the porous structures also is efficient, which can result in considerable higher production efficiency.

Optionally, the filaments are deposited/printed such that one or more side channels in a periphery surface of the porous structure. Such side channels may have a great impact on the pressure drop and the geometric surface area.

Optionally, the three porous structure may form an absorbent structure of stacked filaments (cf. strands) of a catalyst, catalyst carrier or absorbent material, wherein each layer has a number of filaments, wherein at least a first subset of filaments are closely spaced-apart, and wherein said first subset of filaments are non-equidistant filaments separated by a varying distance. The distance may be smaller at the narrowed regions and larger at the widened regions, thereby forming an inter-layer pore at the widened regions.

For example, catalysts prepared through robocasting may have a relatively large surface area. By printing the porous structures according to the method of the disclosure, a high pressure drop across the individual monolith porous structures/bodies can be prevented. In this way, a high pressure drop across a reactor where the monolith structures/bodies are placed (e.g. randomly or structured packed bed) can also be prevented.

Additionally or alternatively, channelling of a gas flow through a reactor with a bed of randomly packed monolith porous structures can be reduced or prevented since an entrance barrier into the monolith porous structures due to the pressure drop across each individual monolith porous structure can be prevented, such that the improvement in a geometric surface area provided by the robocasting technique can be fully utilized. The porous structure may have improved pores whilst providing sufficient structural integrity against pressures or forces.

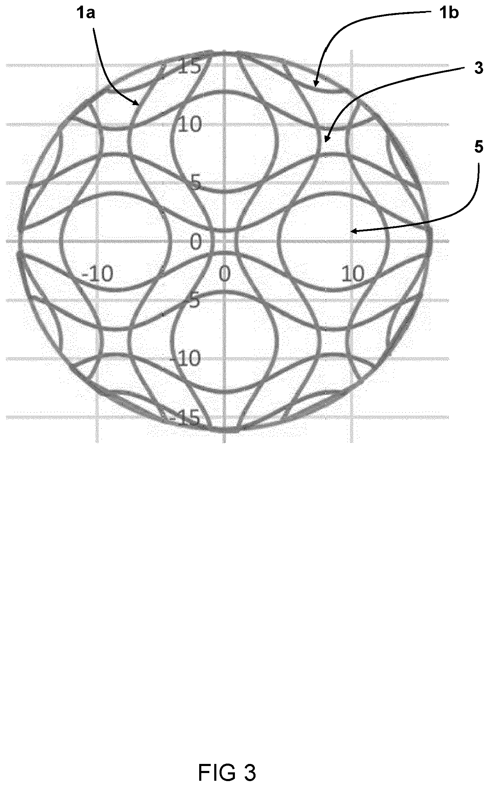

Fig. 3 shows a schematic diagram of a top view of deposition paths in two subsequent layers. Similar to the example shown in fig. 2, the waved print paths are waved in different directions in the subsequent layers. In this example, transverse direction. However, other configurations are also possible. Furthermore, the outer periphery side of the structure is cylindrical in this example.

The printing pattern may include non-parallel filaments, such that relatively large openings can be formed between the non-parallel filaments, wherein at least one of the non-parallel filaments is printed/deposited along a non-straight or waved path. The created openings may have various shapes and dimensions, depending on the design requirements. In some examples, at least one non-parallel filament may be printed/deposited along a periodic waved path, such as for instance a sinusoidal path, a sawtooth path, or the like. In some examples, the non-parallel filaments are mirrored with respect to each other to form relatively large openings therebetween. In such cases, the maximum amplitude of the waved paths is aligned at the opening.

Advantageously, the packing density can be improved when the porous structures are arranged in a packed bed. Additionally or alternatively, the pressure drop across the packed bed can be decreased.

Optionally, the porous structures are used in a catalyst bed or sorbent bed comprising a plurality of catalyst or sorbent particles, each said catalyst or sorbent particle having the form of a three-dimensional shaped particle in which the intra-structure channels are formed by using filaments printed/deposited along waved paths.

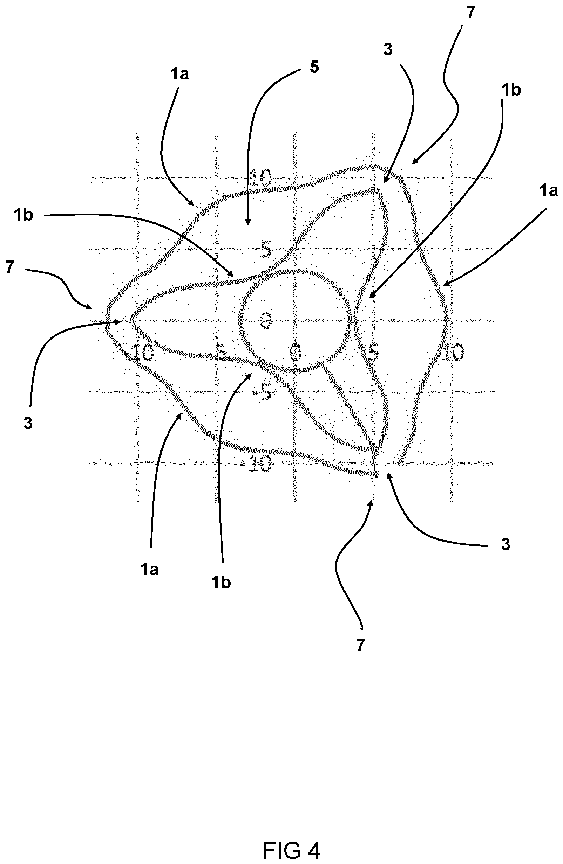

Fig. 4 shows a schematic diagram of deposition paths in a layer. In this example, the narrowed portions 3 are arranged at edges/corners 7 of the structure. It is also possible that only some narrowed portions 3 are arranged at the edges 7, for example when a narrowed region is arranged between two edges 7. In such a case, two widened regions may be formed between two edge 7. Other configurations and arrangements are also envisaged. Advantageously, a structurally strong design can be obtained with an adequate porosity providing beneficial aerodynamic properties (e.g. fluid-structure interaction when fluid is passed through the structure for example in a packed bed, pressure drop, etc.).

In prior art porous structures typically straight struts are stacked in a parallel way. In packed beds of structures of these 3D printed structures, the pressure drop and flow through the structures are a limiting factor. The pressure drop is correlated to the energy required to in order to push reactants trough the reactor. The flow through the porous structures is related to the conversion since the inner portion of the structures has more reactive surface area.

Since the openings/pores are made using non-parallel filaments printed along waved paths, it is possible to create larger intra-structure channels compared to the case with parallel lines. In some examples, the filaments are printed along curved lines with, wherein some opposing filaments are arranged such as to be positioned mirrored to each other. In this way, large pores and/or intra-structure channels can be created, whilst providing an enhanced structural strength and integrity. Advantageously, the larger intra-structure channels may result in lower pressure drops over a packed bed of these porous structures, since the flow going through the printed structures can be increased.

Advantageously, the porous structure may have enhanced properties in various applications. For instance, the porous structure according to the disclosure may provide a catalyst including a catalytically active metal which has a high external surface area or high packing fraction. The catalyst porous structure may provide sufficient mechanical stability so that packed catalyst beds can be formed in a reactor.

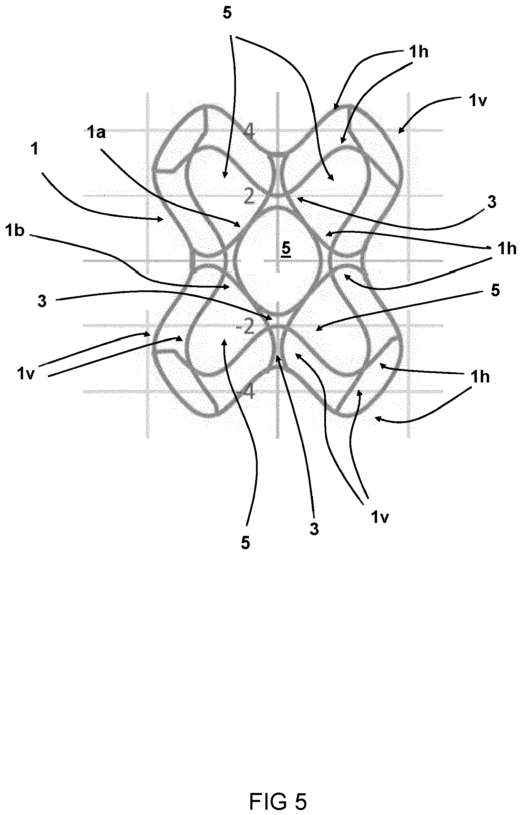

Fig. 5 shows a schematic diagram of a top view of deposition paths in two subsequent layers. In this example, larger pores are formed in the quadri-lope design by adjusting the amplitude and frequency of the waved paths.

Advantageously, an increased flow through the printed porous structures can be obtained, and a lower pressure drop trough packed bed of structures can be obtained. A combination of parallel filaments and non-parallel filaments may be employed in the printing pattern.

Advantageously, the porous structures can result in lower pressure drops, for instance in a structured or in a randomly packed bed. Moreover, the low pressure drop over the packed bed may be achieved without the tendency to channeling. This can be of significant importance for various application, such as for instance catalysis (e.g. catalyst monolith bodies), absorption, heat transfer, etc.

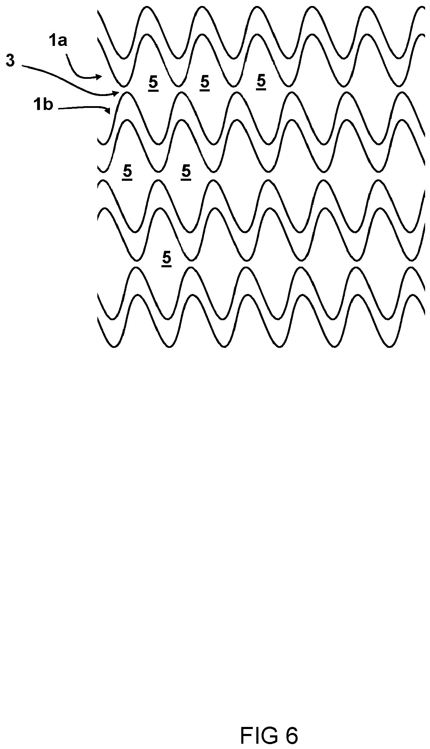

Fig. 6 shows a schematic diagram of deposition paths in a layer. The method according to the disclosure provides for an enhanced production of porous structures. The efficiency for producing porous structures with a filament deposition method can be improved. For instance, the method can also be employed for robocasting or micro-extrusion which include depositing filaments by means of nozzles. In each layer of the porous structure, larger holes may be created by means of an alternating wavy pattern. In this way, improved shaping of the intra-structure channels can be obtained. Additionally, the design of pores and intra-structure channels can be improved, allowing a significant reduction of the pressure drop over the porous structure when said structure is placed in a fluid flow. Additionally or alternatively, a higher strength can be obtained, resulting in improved structural integrity. Additionally or alternatively, more geometric surface can be obtained compared to standard 3D porous structures.

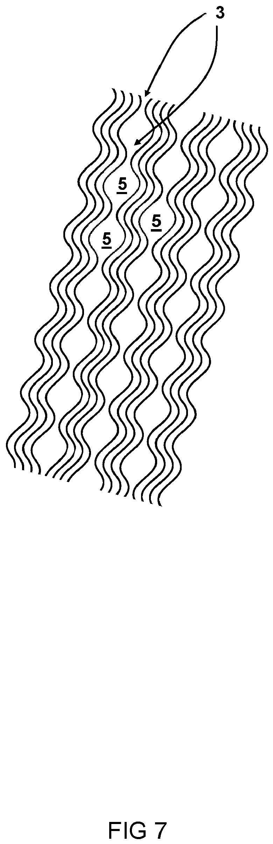

Fig. 7 shows a schematic diagram of deposition paths in a layer. The porous structure of the disclosure provides for geometric pattern which can achieve a significant pressure drop reduction compared to porous structures known in the art. The porous structures can improve the ability to promote and control the interaction of the gas or liquid flow of reactants with the porous structure (e.g. catalyst). The porous structure according to the disclosure has a novel design which is easy to manufacture via 3D printing, and which can provide a high surface area to volume porous structures in combination with control of flow of reactants over and through the porous structures.

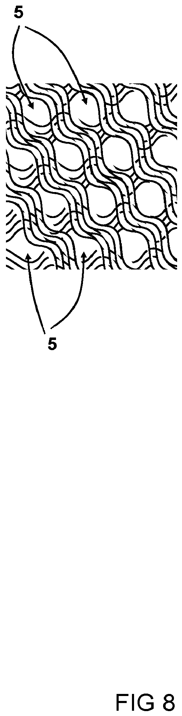

Fig. 8 shows a schematic diagram of deposition paths in two subsequent layers. The layer pattern and layer organization of the three dimensional structures of the disclosure can lead to a significant decrease in pressure drop across each individual three dimensional structure whilst providing adequate structural integrity. This results in a lower pressure drop across a reactor filled with the three dimensional structures of the disclosure and a more homogeneous flow through the reactor bed filled with a random packing of individual three dimensional structures.

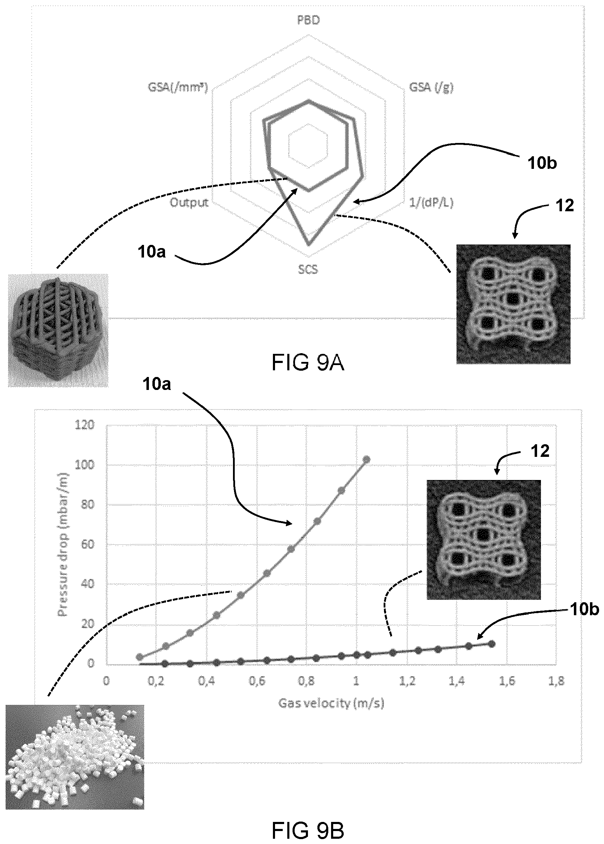

Fig. 9a, 9b show graphs relating to a performance of exemplary porous structures. Fig. 9a compares different performance metrics (Geometric Surface Area (GSA); output; strength, packed bed density; pressure drop in a packed bed) for the two different porous structures having an equal porosity, namely for a first structure indicated in the results by 10a, and for a second structure indicated in the results by 10b. The first structure is a prior art porous structure (small dense extrudate), and the second structure is a porous structure 12 according to the disclosure having an exemplary quadri-lope design. Fig. 9b shows a graph of the pressure drop in function of gas velocity for the two different porous structures in a packed bed.

As can be seen in the results, the porous structures according to the disclosure may result in lower pressure drops compared to structures that are equally porous. As can be seen in the experimental data, the pressure drop over an exemplary porous structure according to the invention is significantly lower.

The quadri-lope design may induce a relatively low pressure drop over a packed bed of structures (e.g. for catalysis or sorption) whilst providing for a beneficial geometric surface area. Moreover, such as structure design can provide for good mechanical strength and available geometric surface area.

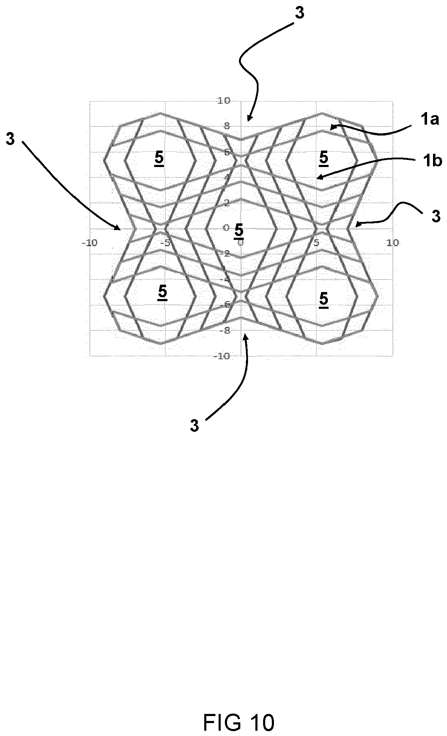

Fig. 10 shows a schematic diagram of a top view of deposition paths in two subsequent layers. In this example, the waved paths have straight portions (e.g. sawtooth function). Various sawtooth wave functions with different periods and/or amplitudes may be employed.

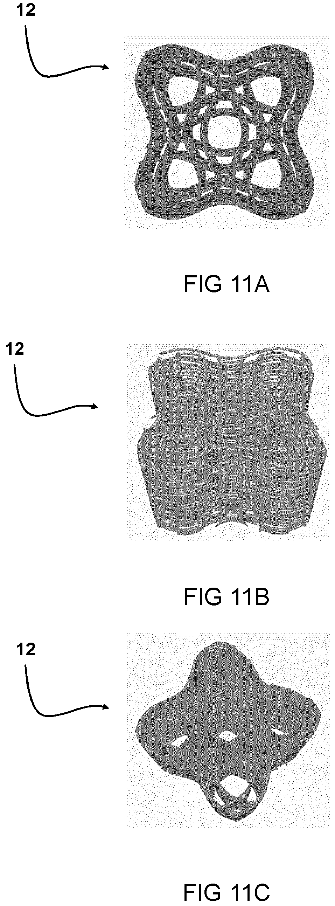

Fig. 11a, 11b, 11c show different views of a schematic diagram of an embodiment of a porous structure. In this example, the porous structure has a quadri-lope design. However, various other designs may be used.

It will be appreciated that the porous structure may be a larger-scale monolithic structure. It is also possible that the porous structure is a smaller-scale monolithic structure which is used in a packed bed, e.g. smaller catalyst particles usable in a packed bed.

Typical materials include metal oxides and ceramics such as alumina, silica, zirconia, titania, magnesia, silicon nitride, silicon carbide, carbon and mixtures thereof. A conventional ceramic catalyst support may also be used. The catalyst support powder may also comprise one or more transition metal compounds, including lanthanide metal compounds and actinide metal compounds, selected from metal oxides, metal hydroxides, metal carbonates, metal hydroxycarbonates or mixture thereof. The transition metal compound may comprise a single or mixed metal oxide or a composition comprising two or more transition metal oxides. Preferably, the catalyst support powder comprises an alumina, metal-aluminate, silica, alumino-silicate, titania, zirconia, magnesia, zinc oxide, or a mixture thereof.

Optionally, the porous structure is a catalytically inert porous structure, e.g. manage fluid flow, heat transfer, catalytic activity, etc. In some examples, the porous structure may not be used to catalyze a chemical reaction. In some examples, the porous structures are mixed with catalytically active porous structures within a catalyst bed. It is also possible to provide a separate bed with inert porous structures which do not include a catalytically active component.

The porous structure may be manufactured by means of any known manufacturing method. The complexity of the shape of the porous structure makes manufacture by additive layer manufacturing or 3D printing methods particularly advantageous. In some examples, a layer of a support material (e.g. powder) is provided, wherein the materials in a layer are bound or fused according to a predetermined pattern. The steps can be repeated layer upon layer to form a porous structure according to the disclosure. Unbound or unfused material (e.g. powder) is readily separable from the porous structure, e.g. by gravity, or by means of an induced fluid flow.

In some examples, the porous structure has an ellipsoid shape. The ellipsoid shape can be understood as a geometric three-dimensional shape having three principal axes. In case all axes are equal, the ellipsoid is known as a sphere. The ellipsoidal porous structures do not have all three major axes being equal. When two major axes of an ellipsoid are equal, the shape is known as an oblate spheroid or ellipsoid of revolution. For example, the porous structures may have the form of a tri-axial ellipsoid (i.e. all three major axes are of different lengths) or spheroid with two major axes of equal length.

The porous structure may have various dimensions. The length of the principal axes of the porous structure may be within the range from 0.5 mm to 100 mm. Typical porous structures may have a longest dimension in the range from 3-30 mm including from 3-15 mm. Typical porous structures may have shorter principal axes in the range from 0.5 mm to 100 mm, more usually 3-30 mm, for example from 3-15 mm. The size of the porous structures affects the inter-structure void space when the porous structures are packed in a packed bed arrangement. Therefore the balance between inter-structure and intra-structure void space may be selected and changed by changing the size of the porous structures.

It will be appreciated that a catalyst porous structure may itself be catalytically active or it may be a catalyst support which is suitable for supporting a catalytically active material. In some examples, the catalyst porous structure includes a catalytically active composition (cf. composition which has catalytic properties for at least one chemical reaction). Optionally, the catalyst porous structure is formed entirely of one or more than one catalytically active composition. Alternatively, the catalyst porous structure may be formed partially of at least one catalytically active composition, for example a catalytically active composition may be present at one or more surfaces of the catalyst porous structure. The catalytically active material may be present over the whole or only portions of the surfaces of the porous structure. It will be appreciated that different catalytically active materials may be present at different surfaces of the porous structure. For example a catalytically active material may be present at the surfaces of one or more intra-structure channels whilst either no catalytically active material is present at other surfaces of the porous structure or a different catalytically active material may be present at other surfaces of the porous structure.

It will be appreciated that the method may involve extrusion printing of build material. Examples of materials that can be used in the extrusion based additive manufacturing process, include ceramic materials (e.g. alumina, zirconia, silica, silicon carbide, silicon nitride, etc.), composite materials (e.g. polymer ceramic composites), metals (RVS, titanium, copper, aluminum, silver, .etc.) zeolites, metal organic frameworks, carbon, graphene etc. Other materials suitable for extrusion based additive manufacturing are also envisaged, such as for instance polymer based materials.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. A method of manufacturing a three-dimensional porous structure, the method including depositing interconnected filaments in a predetermined arrangement in a plurality of stacked layers, wherein the filaments of the consecutive layers are connected to one another to obtain the porous structure with interconnected pores, wherein filaments in the layers are deposited along waved paths such that narrowed regions and widened regions between at least one subset of adjacent filaments deposited along said waved paths are formed, wherein the plurality of stacked layers are positioned such that the widened regions formed in subsequent layers are at least partially overlapping so as to form intra-structure channels.

2. The method according to claim 1, wherein each layer has multiple waved filaments deposited along waved lines, wherein a first subset of the waved lines are non-parallel with respect to each other.

3. The method according to claim 2, wherein widened regions are formed between opposite non-parallel waved lines.

4. The method according to claim 2 or 3, wherein a second subset of the waved lines are parallel with respect to each other.

5. The method according to any one of the preceding claims, wherein the narrowed regions are such that deposited filaments are adjacent each other in those regions.

6. The method according to any one of the preceding claims, wherein the waved paths are periodic paths, wherein the periodic paths have a ratio of an amplitude of the wave to a width of the wave which is in a range between 0.1 to 100, more preferably 1 to 50, even more preferably 2 to 20.

7. The method according to any one of the preceding claims, wherein at least one periodic path has varying wave characteristics such that its ratio varies along its length.

8. The method according to any one of the preceding claims, wherein the three-dimensional porous structure has waved outer side portions formed by portions of outer deposited waved filaments in the plurality of stacked layers.

9. The method according to any one of the preceding claims, wherein layers are symmetrical with respect to at least one symmetry axis.

10. The method according to any one of the preceding claims, wherein the three-dimensional structure has a first set of pores and a second set of pores, wherein pores of the first set of pores are larger than pores of the second set of pores, and wherein the first set of pores are formed at the widened regions, and wherein the second set of pores are formed at the narrowed regions.

11. The method according to claim 10, wherein at least a subset of pores of the first set of pores has an opening surface area which is at least two times larger than an opening surface area of at least a subset of pores of the second set of pores, more preferably at least three times larger, even more preferably at least five time larger.

12. The method according to any one of the preceding claims, wherein the three-dimensional porous structures are manufactured for use as a porous catalyst, a catalyst carrier or absorbent material.

13. A three-dimensional porous structure obtained by material extrusion, the porous structure having interconnected filaments in a predetermined arrangement in a plurality of stacked layers, wherein the filaments of the consecutive layers are connected to one another to obtain the porous structure with interconnected pores, wherein filaments in the layers are deposited along waved paths such that narrowed regions and widened regions between at least one subset of adjacent filaments deposited along said waved paths are formed, wherein the plurality of stacked layers are positioned such that the widened regions formed in subsequent layers are at least partially overlapping so as to form intra-structure channels.

14. A packed bed comprising three-dimensional porous structures according to claim 13.

15. An additive manufacturing system adapted to perform the method according to any one of the claims 1-12.
